(19) Europäisches Patentamt

European Patent Office

Office européen des brevets

(11) Publication number: 0 248 556 B1

(12) EUROPEAN PATENT SPECIFICATION

(45) Date of publication of patent specification: 22.01.92 (51) Int. Cl.⁵: G11B 5/72

(21) Application number: 87304299.8

(22) Date of filing: 14.05.87

(54) Abrasion resistant magnetic recording member.

(30) Priority: 26.05.86 JP 119108/86

(43) Date of publication of application:
09.12.87 Bulletin 87/50

(45) Publication of the grant of the patent:
22.01.92 Bulletin 92/04

(84) Designated Contracting States:
CH DE FR GB IT LI NL

(56) References cited:
EP-A- 0 239 028
GB-A- 2 166 668
US-A- 4 419 404

(73) Proprietor: NIHON SHINKU GIJUTSU
KABUSHIKI KAISHA
2500, Hagizono
Chigasaki-shi Kanagawa-ken(JP)

(72) Inventor: Nakamura, Kyuzo
No.672-20, Yachimata Ho Yachimata-machi
Inba-gun Chiba-Ken(JP)
Inventor: Ota, Yoshifumi
No.129, Yachimata Ni Yachimata-machi
Inba-gun Chiba-Ken(JP)
Inventor: Yamada, Taiki
No. 1-1-5-502, Hashikadai
Narita-shi Chiba-ken(JP)
Inventor: Ishikawa, Michio
Umenosata-Ryo No.617-2, Asahi
Yachimata-machi Inba-gun Chiba-Ken(JP)
Inventor: Tani, Noriaki
Umenosata-Ryo No.617-2, Asahi
Yachimata-machi Inba-gun Chiba-Ken(JP)

(74) Representative: Overbury, Richard Douglas et
al
HASELTINE LAKE & CO Hazlitt House 28
Southampton Buildings Chancery Lane
London WC2A 1AT(GB)

## Description

This invention relates to an abrasion resistant magnetic recording member.

Hitherto, there has been known an abrasion resistant magnetic recording member of the type where a magnetic film is provided with a superficial protective carbonaceous film formed by a plasma enhanced CVD (PCVD) process.

The foregoing conventional abrasion resistant magnetic member shows excellent abrasion resistance to a monolithic head of Mn Zn ferrite, but is disadvantageous in that, when it is applied to a composite type head or a thin coated type head for high density recording (namely a head using as a slider a hard ceramic material such as $CaTiO_3$ or $Al_2O_3.TiC$) the coefficient of friction suddenly or abruptly rises so that it often happens that the head becomes stuck to the disc and/or the disc is injured thereby. Further, in the case of its application to tape or a flexible disc, its abrasion resistant property gives rise to many problems so that it is not suitable for practical use.

It is an object of the present invention to provide an abrasion resistant magnetic recording member of the foregoing previously proposed type which is free from the defects exhibited by the foregoing conventional abrasion resistant magnetic recording members provided with a carbonaceous surfacial protective film and which has excellent abrasion resistance even if applied to a head made of a hard material such as $CaTiO_3$ or $Al_2O_3.TiC$ or the like.

Accordingly the present invention provides an abrasion resistant magnetic recording member comprising a carbonaceous protective film on the surface of a magnetic film formed on a surface of a nonmagnetic substrate, characterised in that the protective film includes a lower layer of comparatively hard carbonaceous film which is formed on the magnetic film by a PCVD process and containing 0 at.% to 5 at.% of hydrogen atoms alone or of fluorine atoms alone or, in total, of a mixture of hydrogen atoms and fluorine atoms, and an upper layer of comparatively soft carbonaceous film prepared by a PCVD process and containing 6 at.% or more of hydrogen atoms alone or of fluorine atoms alone or, in total, of a mixture of hydrogen atoms and fluorine atoms.

EP-A-0239028 (which designates only DE, FR and GB and which was published between the priority date and filing date of the present application) describes magnetic recording members provided with a protective film comprising a lower layer which is a carbonaceous film in the form of amorphous carbon having diamond bonding and an upper layer which is a film of an organic compound having at least one fatty alkyl group having at least 8 carbon atoms at the end of the molecule.

In accordance with the invention, the magnetic recording member in the form of a tape or a disc comprising a magnetic film formed on a surface of a non-magnetic substrate, is coated with a carbonaceous film to provide abrasion resistance. The carbonaceous film is formed on the magnetic film by a PCVD process. In this case, it has been confirmed by many experiments that, depending on the kind of gas (such as a hydrocarbon series gas or a carbon fluoride series gas, or a mixture thereof) introduced into the treating chamber, changes in gas pressure, and changes in electric voltage of the R F or D C discharge, there are obtained various products which give rise to carbonaceous films having differences in properties such as hardness, coefficient of friction, lubricating ability and so on.

More particularly experiments have been carried out from the standpoint of the quantities of hydrogen or fluorine contained in respective upper and lower carbonaceous layers, and as a result, there has been developed an abrasion resistant magnetic recording member provided with the respective properties of the upper carbonaceous layer and the lower carbonaceous layer.

The following Examples illustrate the invention.

### EXAMPLES

There were produced many magnetic recording media in the form of hard type discs. Each included a deposited magnetic film formed of two layers comprising CoNiCr and Cr by a sputtering process on the surface of a NiP/Al hard disc. Thereafter, the discs were treated by a PCVD process using a DC discharge and three kinds of gases, viz., $C_2H_2$ gas, $C_3F_8$ gas and a mixture of 70% $C_2H_2$ gas + 30 % $C_3F_8$ gas. The pressure of the introduced gas was in the range of 1.3 to $1.3 \times 10^2$ Pa ($1 \times 10^{-2}$ - 1 Torr), and the electric voltage of the DC discharge was in the range of -100 to -3,000 V. Either one or both of the values of the gas pressure and the electric voltage were changed variously, so that there were produced various abrasion resistant magnetic recording members of the hard disc type which included protective films having different contents of H atoms alone, F atoms alone or H and F atom mixtures. In regard to these discs, the relation between the atomic content of these atoms and the coefficient of friction of the carbonaceous films was measured. The content of H or F atoms was determined from the absorption spectrum of the C-H bonds and C-F bonds in an infrared absorbing analysis method.

Evaluation of the coefficient of friction was made using an abrasion resistance testing method wherein the respective discs were rotated at a speed of 45 r.p.m. under the application of a 32 g load to the hard head of a 3,370 model using an $Al_2O_3 \cdot TiC$ slider. The coefficient of friction was measured continuously up to 5,500 times (2 hours). In addition, the Constant Start and Stop (C S S) test was carried out. In this case, the thicknesses of the formed films of the respective discs used for the test were all $6 \times 10^{-8}$ m (600 Å). The results are shown in Table 1, Table 2 and Table 3.

Table 1

| Sample No. | Hydrogen content (at.%) | State after 5,500 rounds in abrasion resistance test | | C S S test |
|------------|-------------------------|------------------------|----------------|------------|
| | | Coefficient of friction | Disc surface | |
| 1 | 2 | >1.5 | Nothing changed | Stuck after 100 rounds |
| 2 | 5 | >1.5 | " | Stuck after 500 rounds |
| 3 | 8 | 0.75 | Scratches | Scratches after 1,000 rounds |
| 4 | 15 | 0.45 | " | Scratches after 1,000 rounds |
| 5 | 27 | 0.33 | " | Scratches after 1,000 rounds |
| 6 | 40 | 0.41 | " | Scratches after 100 rounds |

Table 2

| Sample No. | Fluorine content (at.%) | State after 5,500 rounds in abrasion resistance test | | C S S test |
|------------|-------------------------|------------------------|----------------|------------|
| | | Coefficient of friction | Disc surface | |
| 7 | 3 | >1.5 | Nothing changed | Stuck after 500 rounds |
| 8 | 5 | >1.5 | " | Stuck after 1,000 rounds |
| 9 | 7 | 0.68 | Scratches | Scratches after 1,000 rounds |
| 10 | 11 | 0.55 | " | " |
| 11 | 20 | 0.35 | " | Scratches after 500 rounds |
| 12 | 35 | 0.43 | " | " |

3

Table 3

| Sample No. | Hydrogen content (at.%) | Fluorine content (at.%) | Hydrogen + Fluorine content in total (at.%) | State after 5,500 rounds in abrasion resistance test | | C S S test |
| --- | --- | --- | --- | --- | --- | --- |
| | | | | Coefficient of friction | Disc surface | |
| 13 | 2 | 1 | 3 | >1.5 | Nothing changed | Stuck after 1,000 rounds |
| 14 | 2 | 2 | 4 | >1.5 | = | = |
| 15 | 4 | 2 | 6 | 0.65 | Scratches | Scratches after 1,000 rounds |
| 16 | 10 | 8 | 18 | 0.35 | = | = |

Thus, it was confirmed that, as will be clear from Table 1, Table 2 and Table 3, in the case where the content of H alone or F alone or the total contents of H and F is 5 at.% or less, there can be obtained a carbonaceous film which has a high coefficient of friction and which is so hard that the surface thereof does not become scratched at all and in the case where the content of H alone or F alone or the total content of H and F is 6 at.% or more, there can be obtained a carbonaceous film which has a low coefficient of friction

4

but which is so soft that its surface is scratched by the hard slider of the head.

According to this invention, the differences in the hardness and coefficient of friction of these carbonaceous films are made use of so skillfully that these different carbonaceous films are put one upon another in two layers so as to protect the surface of the magnetic film, and provide an abrasion resistant magnetic recording member which can be used in smooth and good condition with the foregoing ceramic slider without the surface of the magnetic film being scratched. More particularly the surface of the magnetic film is covered with a carbonaceous surfacial protective film formed of a lower layer comprising a carbonaceous film containing 5 at.% or less of hydrogen atoms alone or fluorine atoms alone or of both hydrogen atoms and fluorine atoms in total, and an upper layer comprising a carbonaceous film containing 6 at.% or more of H atoms alone or F atoms alone or of both H and F atoms in total, so that the foregoing excellent abrasion resistant magnetic recording member can be realised. The results of the abrasion resistance test and the C S S test on some examples embodying this invention are shown in Table 4 described below.

Table 4

| Sample No. | Hydrogen, fluorine content (at.%) | | Condition after 5,500 rounds in acceleration test | | C S S test |
|---|---|---|---|---|---|
| | Lower layer | Upper layer | Coefficient of friction | Disc surface | |
| 17 | 2 at.% H | 15 at.% H | 0.48 | Nothing changed | above thirty thousand (30,000) times |
| 18 | 5 at.% H | 27 at.% H | 0.36 | = | = |
| 19 | 3 at.% F | 11 at.% F | 0.55 | = | = |
| 20 | 2 at.% H + 2 at.% F | 10 at.% H + 8 at.% F | 0.40 | = | = |
| 21 | 2 at.% H + 1 at.% F | 4 at.% H + 2 at.% F | 0.60 | = | = |

Table 4 shows that the foregoing examples of the invention have small coefficients of friction and are not scratched at all and in addition have remarkable abrasion resistances (as high as several tens of thousands in the C S S test). In the examples used for the above tests, the thicknesses of the upper and lower carbonaceous layers of the protective film were $3 \times 10^{-8}$ m (300 Å).

The reason why the foregoing effects occur is believed to be due to the fact that the coefficient of friction of the protective film with the hard slider of the head can be kept small by the soft and lubricative carbonaceous upper layer so that the hard carbonaceous lower layer is always lubricated by the soft and lubricative carbonaceous upper layer. Thus even if the hard slider should pass through the upper layer to reach the surface of the hard lower layer, the coefficient of friction can still be kept small for a long period of time, and meanwhile the hard lower layer can protect the magnetic film from being damaged by the hard slider. Thus, by the cooperation of the soft upper layer and the hard lower layer, there can be obtained the foregoing several tens of thousand cycles in the C S S test.

From the above explanation, it will be appreciated that the carbonaceous lower layer does not always necessarily contain hydrogen atoms and/or fluorine atoms.

In order to obtain the carbonaceous lower layer containing 5 at.% or less of hydrogen atoms alone, fluorine atoms alone or a mixture thereof as shown in Table 4, for instance, the gas pressure introduced into the PCVD treating chamber may be set to be about 1.3 Pa ($1 \times 10^{-2}$ Torr). In order to obtain the soft carbonaceous layer containing 6 at.% or more of the H and/or F atoms, the gas pressure may be set to be about 13 Pa ($1 \times 10^{-1}$ Torr) or so. However, the gas pressure is not limited to these values. As for the hydrocarbon series gas or the fluorinated hydrocarbon series gas or the fluorocarbon series gas, there may be used other desired gases than the gases used in the foregoing embodying examples. As for the type of discs, there may be used flexible discs, tapes or other desired shape or type of substrate than the hard disc used for producing the foregoing embodying examples. For the electric discharge, there may effectively be used a microwave type discharge or the like instead of the R F or D C type discharges.

The carbonaceous protective film comprising upper and lower carbonaceous layers in accordance with this invention may be formed on the surface of the magnetic film not only directly, but also indirectly by means of an intermediate layer of any kind of material such as $SiO_2$, BN, B, and Cr.

Thus, according to this invention, an abrasion resistant magnetic recording member is so formed that a surface of the magnetic film thereof is protected with a carbonaceous protective film formed of two layers comprising a lower layer of a hard carbonaceous film containing 5 at.% or less of H atoms or F atoms or a mixture thereof and an upper layer of a soft and lubricative carbonaceous film containing 6 at.% or more of H atoms or F atoms or a mixture thereof. Thus the member can be used with a head having a hard slider such as a monolithic head made of $CaTiO_3$ and can be used for a long time.

## Claims

1. An abrasion resistant magnetic recording member comprising a carbonaceous protective film on the surface of a magnetic film formed on a surface of a nonmagnetic substrate, characterised in that the protective film includes a lower layer of comparatively hard carbonaceous film which is formed on the magnetic film by a PCVD process and containing 0 at.% to 5 at.% of hydrogen atoms alone or of fluorine atoms alone or, in total, of a mixture of hydrogen atoms and fluorine atoms, and an upper layer of comparatively soft carbonaceous film prepared by a PCVD process and containing 6 at.% or more of hydrogen atoms alone or of fluorine atoms alone or, in total, of a mixture of hydrogen atoms and fluorine atoms.

2. An abrasion resistant magnetic recording member as claimed in claim 1, wherein the upper layer is a PCVD carbonaceous film containing 6 at.% or more of fluorine atoms.

3. An abrasion resistant magnetic recording member as claimed in claim 1, wherein the upper layer is a PCVD carbonaceous film containing 6 at.% or more, in total, of hydrogen atoms and fluorine atoms.

4. An abrasion resistant magnetic recording member as claimed in claim 1, 2 or 3 wherein the lower layer is a PCVD carbonaceous film containing 0. at.% to 5 at.% of hydrogen atoms.

5. An abrasion resistant magnetic recording member as claimed in claim 1, 2, or 3 wherein the lower layer is a PCVD carbonaceous film containing 0. at.% to 5 at.% of fluorine atoms.

6. An abrasion resistant magnetic recording member as claimed in claim 1, 2 or 3 wherein the lower layer is a PCVD carbonaceous film containing 0 at.% to 5 at.%, in total, of hydrogen atoms and fluorine atoms.

## Revendications

1. Substrat d'enregistrement magnétique résistant à l'abrasion, comprenant un film carboné protecteur sur la surface d'un film magnétique déposé sur une surface d'un support non magnétique, caractérisé en ce que le film protecteur comprend une couche inférieure d'un film carboné relativement dur formé sur le film magnétique selon un procédé de dépôt par voie chimique en phase vapeur activé avec un plasma (PCVD) et contenant de 0 atome % à 5 atomes % d'atomes d'hydrogène seul, de fluor seul, ou d'un mélange d'hydrogène et de fluor ensemble, et une couche supérieure d'un film carboné relativement mou préparé selon un procédé PCVD contenant 6 atomes % ou plus d'hydrogène seul, de fluor seul, ou d'un mélange d'hydrogène et de fluor ensemble.

2. Substrat d'enregistrement magnétique résistant à l'abrasion selon la revendication 1, dans lequel la couche supérieure est un film carboné déposé par PCVD contenant 6 atomes % ou plus de fluor.

3. Substrat d'enregistrement magnétique résistant à l'abrasion selon la revendication 1, dans lequel la couche supérieure est un film carboné déposé par PCVD, contenant 6 atomes % ou plus d'hydrogène et de fluor ensemble.

4. Substrat d'enregistrement magnétique résistant à l'abrasion selon la revendication 1, 2 ou 3, dans lequel la couche inférieure est un film carboné déposé par PCVD, contenant 0 atome % à 5 atomes % d'hydrogène.

5. Substrat d'enregistrement magnétique résistant à l'abrasion selon la revendication 1, 2 ou 3, dans lequel la couche inférieure est un film carboné déposé par PCVD, contenant de 0 atome % à 5 atomes % de fluor.

6. Substrat d'enregistrement magnétique résistant à l'abrasion selon la revendication 1, 2 ou 3, dans lequel la couche inférieure est un film carboné déposé par PCVD, contenant de 0 atome % à 5 atomes % d'hydrogène et de fluor ensemble.

## Patentansprüche

1. Abriebfester magnetischer Aufzeichnungsträger enthaltend einen kohlenstoffhaltigen Schutzfilm aufder Oberfläche eines magnetischen Films, der aufeiner Oberfläche eines nichtmagnetischen Substrates gebildet ist, dadurch gekennzeichnet, daß der Schutzfilm eine untere Schicht eines verhältnismäßig harten kohlenstoffhaltigen Films, der aufdem magnetischen Film durch ein PCVD-Verfahren gebildet ist und 0 bis 5 Atom-% Wasserstoffatome allein oder Fluoratome allein oder insgesamt eine Mischung von Wasserstoffatomen und Fluoratomen enthält, und eine obere Schicht eines verhältnismäßig weichen kohlenstoffhaltigen Films aufweist, der durch ein PCVD-Verfahren hergestellt und 6 Atom-% oder mehr Wasserstoffatome allein oder Fluoratome allein oder insgesamt eine Mischung von Wasserstoffatomen und Fluoratomen enthält.

2. Abriebfester magnetischer Aufzeichnungsträger nach Anspruch 1, bei dem die obere Schicht ein PCVD-kohlenstoffhaltiger Film ist, der 6 Atom-% oder mehr Fluoratome enthält.

3. Abriebfester magnetischer Aufzeichnungsträger nach Anspruch 1, bei dem die obere Schicht ein PVCD-kohlenstoffhaltiger Film ist, der insgesamt 6 Atom-% oder mehr an Wasserstoffatomen und Fluoratomen enthält.

4. Abriebfester magnetischer Aufzeichnungsträger nach Anspruch 1, 2 oder 3, bei der die untere Schicht ein PCVD-kohlenstoffhaltiger Film ist, der 0 bis 5 Atom-% Wasserstoffatome enthält.

5. Abriebfester magnetischer Aufzeichnungsträger nach Anspruch 1, 2 oder 3, bei dem die untere Schicht eine PCVD-kohlenstoffhaltiger Film ist, der 0 bis 5 Atom-% Fluoratome enthält.

6.  Abriebfester magnetischer Aufzeichnungsträger nach Anspruch 1, 2 oder 3, bei dem die untere Schicht ein PCVD-kohlenstoffhaltiger Film ist, der insgesamt 0 bis 5 Atom-% an Wasserstoffatomen und Fluoratomen enthält.